**Europäisches Patentamt**

**European Patent Office**

**Office européen des brevets**

(11) Publication number : **0 506 600 A1**

# (12) EUROPEAN PATENT APPLICATION

(21) Application number : **92610020.7**

(22) Date of filing : **26.03.92**

(51) Int. Cl.⁵ : **E21B 43/00, B65G 5/00**

(30) Priority : **27.03.91 DK 565/91**

(43) Date of publication of application :
**30.09.92 Bulletin 92/40**

(84) Designated Contracting States :
**PT**

(71) Applicant : **DANSK OLIE- OG
GASPRODUKTION A/S
Agern Allé 24-26
DK-2970 Hoersholm (DK)**

(72) Inventor : **Magtengaard,Jesper Ricard
Drabaekvej 5, Blovstroed
DK-3450 Alleroed (DK)**
Inventor : **Jensen.Preben
Kaj Munsvej 9A
DK-3460 Birkeroed (Dk)**

(74) Representative : **Andersen, Henrik Rastrup et
al
c/o Plougmann & Vingtoft Sankt Annae Plads
11 P.O. Box 3007
DK-1021 Copenhagen K (DK)**

(54) **A method for drying a subterranean cavern.**

(57) A method is provided for reducing the water
content of a natural or artificial subterranean
cavern provided with (i) means for introducing a
relatively dry gas into the cavern and (ii) means
for withdrawing gas from the cavern. The gas-
introduction means and the gas-withdrawal
means each comprise a gas-transfer conduit
having an open end opening to the cavern, the
open end of one of the gas-transfer conduits
being positioned lower than the open end of the
other gas-transfer conduit, and the method in
question comprises the introduction of rela-
tively dry gas into the cavern via one of the
gas-transfer conduits, and the withdrawal, via
the other gas-transfer conduit, of gas having a
higher water vapour content than that of the
relatively dry gas which is introduced. The
method is well suited to reduction of the water
content of a cavern which is to be used for the
storage of a fluid, such as a cavern for the
storage of "natural gas".

Fig. 1

The present invention relates to a method for reducing the water content of a natural or artificial subterranean cavern, in particular an artificially created subterranean cavern which is to be used for the storage of a fluid (i.e. a liquid or mixture of liquids, or a gas or mixture of gases), particularly "natural gas" [i.e. a methane-rich, readily combustible mixture of gases which is generally believed to derive from the slow natural breakdown or decomposition of deposits of organic matter of plant or animal origin], and for which fluid it is desirable that the water content during storage should not exceed a certain limit.

BACKGROUND OF THE INVENTION

Vast developments have taken place in the last three decades or so in the exploitation of underground reserves of gaseous fossil fuels, including reserves occurring in association with underground oil deposits. In Europe, for example, new industries have developed around the transportation, storage and distribution of, in particular, so-called "natural gas" (vide supra) deriving from onshore or offshore reserves, and a number of European nations, including Germany, Great Britain, France, Italy, Denmark and Holland, now make extensive use of natural gas (both from their own territorial reserves and from other sources) as a fuel gas for industrial and domestic heating and for power generation, and as a feedstock in the chemical industry.

In order to maintain a stable supply of natural gas to the consumer while taking account of such factors as seasonal and daily variations in consumption, and the possibility of temporary interruptions in delivery arising from, e.g., accidents, repair work and/or construction work at the production source (which is often far from the consumer) or at some point in the gas-transportation system which transports the gas to the distribution network, it is clear that the provision, at some appropriate point in the supply network, of storage capacity adequate for the storage of a suitably large "buffer reserve" of gas is necessary.

A particularly attractive solution to the latter-mentioned storage problem in several countries has been to use subterranean caverns arising as a consequence of so-called "solution-mining" of rock salt (primarily sodium chloride) from underground deposits ["salt domes", "salt beds" (the latter also being known as "bedded salt") and the like] of such salt. Such caverns are well suited for gas storage since they are, owing to the compact nature of salt deposits or formations and the general lack of cracks, fissures, fractures, joints or geological faults in such formations, essentially completely gas-tight.

Although the present invention does not relate to solution-mining as such, the general principles of one widely used technique for solution-mining are described in the following for the purposes of clarity and better understanding of the invention itself:

Firstly, a (normally essentially vertical) shaft or bore is drilled from the Earth's surface downwards into the underground salt deposit in question to some desired depth. Depending on the nature and stability of the geological strata through which the shaft passes, it will almost always be necessary to then establish a lining or casing in the shaft. This casing is typically constructed of coupled sections of steel pipe having an external diameter which is slightly less than the internal diameter of the shaft itself; the space between the casing and the inside wall of the shaft is normally filled with cement. This lining or casing is normally introduced at the stage where the shaft has been drilled down to a depth which is somewhat below the uppermost part of the deposit in question, the bottom of the established casing then being at about this point. After establishment of the casing, drilling is continued until the final desired depth of the shaft is reached.

Two conduits (e.g. pipe conduits made up of appropriately coupled lengths of steel tubing), suitably such that one extends essentially to the bottom of the shaft while the other is slightly shorter, are then normally established in the shaft. One of the conduits (in the following denoted the "water conduit") is used to pump water (normally water at ambient temperature, since the solubility of sodium chloride as a function of water temperature varies only slightly) down to the salt formation, and the other (in the following referred to as the "brine conduit") is used to transport salt solution (brine) up to the Earth's surface.

The water conduit and the brine conduit are very suitably substantially concentric conduits, in which case the conduit having the smaller diameter (and extending within the conduit of larger diameter) is the longer of the two. The conduits may then be exploited in a manner such that the water conduit and the brine conduit initially are the longer (i.e. smaller diameter) and the shorter (i.e. larger diameter) conduit, respectively, or vice versa. The rôle of the two conduits may subsequently be reversed as the process of salt dissolution progresses.

As the salt-dissolution process continues, with the attendant formation of a cavity of increasing size in the vicinity of the lower ends of the conduits, the conduits are gradually drawn upwards, possibly at different rates but such that the lower end of the conduit of smaller diameter is always lower than that of the conduit of larger diameter. In this manner a (brine-filled) cavern thus becomes formed in the salt deposit.

In the case of salt deposits of relatively great vertical thickness (such as "salt domes") it may be advantageous, in order to adequately exploit the salt deposit(s) in question, to operate the solution-mining process in a manner which results in the formation of a roughly cylindrical cavern; however, in the case of salt deposits occurring as relatively thin layers ("salt beds" and the like) it may be more practicable to use a solution-mining procedure resulting in the formation of a more spherical or "pear-shaped" cavern. Such variations can be achieved by suitably varying the rôle, the relative placement and the relative movement of the conduits.

When a particular cavern has been selected for the purposes of storage of a fluid (e.g. natural gas), i.e. after cessation of solution-mining activity in the cavern in question, the first task is to remove the brine remaining in the cavern. Owing to the possibility of considerable salt-enhanced corrosion of the water conduit and brine conduit during the solution mining process (and the attendant risk of weakening of these conduits), it may be practical to remove these conduits completely, and to then establish a new conduit (of smaller diameter than the casing and referred to in the following as the "production conduit") within the casing such that the lower open end of this production conduit is at a relatively short distance below the lower end of the casing; the annular space between the casing and the production conduit is then sealed, normally at a point near the lower end of the casing, by the establishment of a seal (often referred to as a "packer"). Finally, there is then established a further conduit (referred to in the following as the "brine-withdrawal conduit") which is of smaller diameter than the production conduit and which extends within the production conduit (preferably substantially concentrically); the brine-withdrawal conduit extends substantially down to the bottom of the cavern. It is, of course, not essential that the brine-withdrawal conduit extends within the production conduit; however, the alternative use of two essentially parallel conduits will require that a seal must be established around both conduits rather than just one, and this may, in practice, be considerably more difficult to achieve.

Non-limiting examples of sets of dimensions (in inches) of essentially circularly cylindrical (and substantially concentric) casings, production conduits and brine-withdrawal conduits which are fairly commonly employed in connection with caverns for the storage of natural gas are 13 3/8″, 9 5/8″ and 4 1/2″, respectively, and 9 5/8″, 7 5/8″ and 4″, respectively (the given dimensions being outside diameters)

It is then possible, by applying a suitably high pressure of gas (natural gas itself in the case of a cavern intended for storage of natural gas) via the production conduit to force out, via the brine-withdrawal conduit, most of the brine remaining in the cavern and at the same time fill the thereby vacated volume of the cavern with gas. However, the cavern may still retain some (in principle removable) water [e.g. possibly in the form of loosely bound water of crystallization in salts other than sodium chloride which may be present in the deposit of crude salt (rock salt)] or aqueous phase in and/or on the cavern walls and/or in small crevices or recesses in the cavern; some aqueous phase will normally also remain in the lowest-lying regions of the cavern, e.g. in a so-called "sump" present at the bottom of the cavern (the sump may, for example, be a depression at the bottom of the cavern corresponding to what was originally the bottom of the drilled shaft), and for some reason (e.g. the presence of lumps of insoluble rock or other debris which has fallen into a "sump") be inaccessible for removal, or at least partial removal, in the manner described above.

It should be noted at this point that it is, in principle, possible to omit the establishment of a production conduit per se in the cavern, and to simply establish a brine-withdrawal conduit directly within the casing. In this case the casing itself will serve the same function as a production conduit, i.e. gas pressure will be applied to the cavern via the casing. However, by thus doing there is a considerable risk that the casing will be corroded, and thus weakened, at a far greater rate than if the casing is essentially isolated from the contents of the cavern by means of a seal ("packer" or the like), and for these reasons it is normally preferable to establish a production conduit, as outlined above.

An extensive technology, generally referred to as "sump sealing", has developed in connection with the sealing off of reservoirs of aqueous phase (typically aqueous phase lying inaccessible in a sump of the above-mentioned type) present at the bottom of subterranean caverns, and there are numerous patent documents relating to this field. The general principle underlying the majority of proposed approaches to sump sealing is the introduction into the cavern of material(s) which either directly or indirectly lead(s) to the formation of a substantially water-insoluble and water/water vapour-impermeable barrier (generally referred to as a "sump seal") covering the surface of the aqueous phase in question. Such barriers may, e.g., be provided by a layer of a liquid or semi-liquid hydrocarbon fraction of low volatility, or of a synthetic polymer formed by in situ polymerization of one or more appropriate, preferably liquid, monomers. Sump seals which remain liquid, or can at least flow, have the advantage that they are "self-healing", i.e. the flowability of such a sump-sealing material will result in the rapid disappearance of any breakage in the surface of the sump seal caused, e.g., by falls of rock, debris or the like within the cavern.

Some examples of patent documents relating to sump sealing are the following:

US 3,949,559, which relates to a process for isolating brine layers in underground gas-storage caverns by injecting a liquid polyurethane-resin-forming composition (comprising a polyol and a polyisocyanate of an aromatic hydrocarbon) which after hardening by reaction with water forms a resinous, essentially water-vapour-impervious barrier between the brine and the gas-storage space thereabove;

US 4,109,471, which relates to a method for depositing a layer of bitumen on a "water sump layer" at the bottom of an underground cavern used for storing gaseous hydrocarbons, the method comprising injecting a mixture of bitumen and a volatile liquid hydrocarbon carrier and allowing the volatile hydrocarbon to vaporize in the cavern; and

US 4,618,282, which relates to a composition and a method for covering the sump in cavities serving to store gaseous or liquid, non-aqueous substances using geologically old crude oil to which is added a reactive component (such as an isocyanate or an epoxy compound) which combines with the functional groups of the crude oil and blocks them.

The material(s) to be used to sump-seal a cavern may suitably be introduced into a cavern of the type described here via the now disused brine-withdrawal conduit. After a sump seal has been established, as well as in the case of caverns for which it has not been regarded necessary to establish a sump-seal, it has hitherto been normal practice to remove the brine-withdrawal conduit completely. The subsequent exploitation of a thus-remaining cavern (with or without sump sealing) for the buffer storage of, e.g., natural gas has until now thus, in essence, been such that natural gas as delivered from the supply source [which will often have been pretreated to reduce or remove any content of undesired substances such as hydrogen sulfide ($H_2S$) and/or carbon dioxide ($CO_2$), and/or pre-dried to reduce the content of water vapour or, possibly, water] is pumped under pressure into the cavern, and later withdrawn from the cavern when there is a need therefor, via a common conduit.

In spite of the establishment of a sump seal in a subterranean cavern of the type discussed here, there will, as mentioned above, normally remain a considerable amount of aqueous phase (i.e. brine in the case of a cavern created as the result of solution mining of rock salt) in and/or on the cavern walls and/or in small crevices or recesses in the cavern, and to the knowledge of the present inventors no method suitable for the partial or complete removal or isolation of this remaining aqueous phase has, prior to the advent of the present invention, (vide infra) been proposed, described or implemented.

As indicated previously, above, preferred embodiments of the present invention address themselves particularly to the maintenance of a relatively low water vapour content in natural gas which is stored in a subterranean cavern of the above-described type. The origin and nature of problems which can arise if the water vapour content of natural gas stored in the manner (and for the purpose) described is too high, which problems the present invention is intended to solve, are described in the following:

Natural gas is, as previously mentioned, rich in methane, and often contains appreciable amounts of higher alkanes, notably ethane ($C_2H_6$) and propane ($C_3H_8$). Methane ($CH_4$) ethane, propane and a number of other gases, examples being the inert gases argon, krypton and xenon, have the ability to form solid, crystalline clathrate compounds (also known as inclusion compounds) with water; the structure of such clathrates ("gas hydrates") consists of cages of "host" water molecules in which are enclosed "guest" molecules of e.g. methane. The gas molecules are thus not chemically bonded (in the normal sense of the word) to surrounding water molecules, and the formation of such gas hydrates is, in general, readily reversible. These gas hydrates often exhibit a crystal structure having a cubic unit cell containing 46 $H_2O$ molecules, and in the case of methane (and correspondingly for the examples of inert gases mentioned above) the ideal clathrate composition $8CH_4.46H_2O$ has been established, i.e. the ideal empirical formula is approximately $CH_4.6H_2O$. However, complete occupation of the available sites in the "host" cage by methane molecules is generally not attained, and (depending on the prevailing conditions) methane hydrate species having a considerably smaller methane:water ratio, such as a species with the approximate empirical formula $CH_4.19H_2O$, have been identified.

As mentioned above, it has hitherto been normal practice to introduce natural gas into, and remove natural gas from, a gas-storage cavern via a common conduit or common conduits. Upon withdrawing natural gas from the body of gas under pressure in the cavern for consumption purposes, it is clear that the resulting drop in gas pressure in the cavern and associated conduits will, in accordance with well-known physical principles, lead to cooling of the gas; depending on such factors as the water vapour content of the gas, the pressure drop in the cavern and conduits, the prevailing temperature and pressure of the gas, and the rate at which gas is withdrawn from the cavern, extensive formation of gas hydrate crystals, particularly in the above-ground installations and in the uppermost part of the conduit system, is often experienced following prolonged withdrawal of gas. This gas hydrate, which resembles snow in appearance and consistency, can rather quickly lead to complete or partial blockage or clogging of, e.g., reduction valves, filters and/or other above-ground installations forming a part of the gas-withdrawal and gas-process system; there may also, e.g. under extreme temperature and/or gas-withdrawal conditions, eventually be a risk of partial or complete blockage of the upper regions of the gas-withdrawal conduit.

Although it is possible initially to hinder gas hydrate formation (by lowering the dew-point of the gas) in certain parts of the above-ground installations by injecting a hydrate-formation inhibitor (such as methanol, ethylene glycol or another glycol) into the gas stream, continued withdrawal of gas from the cavern will result in continuing formation of gas hydrate beginning at increasingly lower-lying locations within the gas-withdrawal conduit or possibly even within the cavern itself. Sooner or later, the increasing extent of gas hydrate formation, and the attendant transportation of gas hydrate with the gas stream up to the above-ground installations will, in spite of injection of a hydrate-formation inhibitor, result in sufficient blockage of the system to result in serious reduction in supply capacity (to the consumer).

All other things being equal, it will be clear to the skilled person that the lower the water-vapour content of natural gas which is withdrawn from a cavern, the lower will be the risk of gas hydrate formation during withdrawal.

On the basis of the above it is clear that it would be highly desirable to be able to maintain the water-vapour content of the stored gas at a level which is low enough to ensure that gas hydrate formation in the manner (and with the consequences) described above is completely or substantially eliminated; it is an object of the present invention to provide a solution to this problem. However, as will be apparent from the following, the method of the invention is not limited to applications relating to the underground storage of gas, but is believed to be useful for reducing the water content of numerous types of caverns and for a wide variety of purposes.

DESCRIPTION OF THE INVENTION

One aspect of the present invention thus provides a method for reducing the water content of a natural or artificial subterranean cavern,

the cavern at least being provided with (i) means for introducing a relatively dry gas into the cavern and (ii) means for withdrawing gas from the cavern, the gas-introduction means and the gas-withdrawal means each comprising a gas-transfer conduit having an open end opening to the cavern, the open end of one of the gas-transfer conduits being positioned lower than the open end of the other of the gas-transfer conduits,

the method comprising:

introducing relatively dry gas into the cavern via one of the gas-transfer conduits, and

withdrawing, via the other of the gas-transfer conduits, gas having a higher water vapour content than that of the introduced gas.

By the term "subterranean cavern" in the context of the invention is meant any cavern, cavity, cave or hollowed-out space situated below or within the boundaries of the earth's surface. Such a cavern may be one which occurs naturally in, or has been artificially created in, geological strata or formations comprising materials such as, for example, igneous or metamorphic rocks (e.g. basalt or granite) or sedimentary rocks (e.g. chalk, limestone or salt). Thus, included within the definition of a subterranean cavern are, e.g., natural or artificial caverns, cavities, caves or hollowed-out spaces in mountains, cliffs, hills and the like. As already indicated, the cavern(s) in question may be of natural or artificial origin, and in the latter case the cavern(s) may be have been formed, for example, by drilling, by excavation, by blasting (i.e. by use of explosives), by dissolution [as, e.g., in the case of caverns formed as a result of solution-mining of crude sodium chloride ("rock salt" and the like) or some other water-soluble salt(s) (possible examples being potassium or sodium nitrate)], by flushing [e.g. flushing-out (by means of, e.g., a stream or jet of water or other fluid) of inorganic or organic debris or other loose material from a cavity wholly or partly filled with such debris or material, or eroding away relatively soft material from a deposit or formation consisting of such material by means of, e.g, a high-pressure jet of water or other fluid] or by any other appropriate method.

It is believed that by steadily and not excessively violently introducing relatively dry gas into the cavern at some level in the cavern while at the same time withdrawing gas at an another (higher or lower) level in the cavern, gas movement takes place such that it may to a first approximation may be described as a unidirectional, continuing movement of gas in a "piston-like" manner (i.e. such that the flow of gas is essentially laminar) between the level of the open end of the gas-transfer conduit of the gas-introduction means and the level of the open end of the gas-transfer conduit of the gas-withdrawal means. This movement of what is initially relatively dry gas over the inner surfaces of the cavern (which may, as discussed above, retain some removable water or some aqueous phase), or past crevices or recesses retaining water or aqueous phase, will generally lead to uptake of water (as water vapour) by the gas, and thus (assuming that further water or other aqueous phase cannot enter the cavern in some manner) to a reduction in the water content of the cavern.

In performing the method of the invention, the introduction of the relatively dry gas into the cavern and the withdrawal of gas having a higher water vapour content from the cavern may take place substantially simultaneously and continuously, or substantially simultaneously and discontinuously. Alternatively, the introduction of the relatively dry gas into the cavern and the withdrawal of gas having a higher water vapour content from the cavern may take place in an alternating, cyclic manner, i.e. such that relatively dry gas is first introduced into the cavern for some appropriate length of time, after which (i.e. after cessation of gas introduction) gas is withdrawn from the cavern for a further appropriate length of time (it is, of course, equally possible to start the process with gas-withdrawal as the very first step, and in this case it may, for example, further be advantageous to withdraw an atypically large amount of gas from the cavern in the very first gas-withdrawal step so as to achieve as large as initial reduction in the total water content within the cavern as possible); this alternating sequence of introduction of relatively dry gas and withdrawal of "moist" gas is repeated an appropriately large number of times. This latter embodiment of the method of the invention is presently being employed (vide infra) in field-trials designed to test the efficacy of the method for reducing the water-vapour content of natural gas stored in subterranean caverns in "salt dome" strata.

By continuing the process according to the invention for a sufficiently long time it should, at least in principle, ultimately be possible to "dry" the cavern to a point of dynamic equilibrium at which substantially no further net uptake of water by the relatively dry gas (and thereby no further removal of water from the cavern) takes place. For the purposes of a preferred embodiment of the method of the invention, in which preferred embodiment (vide infra) the cavern in question is a cavern to be used for the storage of natural gas and the purpose of performing the process is primarily to reduce the water-vapour content of gas to be withdrawn from the cavern, thereby reducing or eliminating gas hydrate formation during gas withdrawal, it may be sufficient to reduce the water content of the cavern of interest to below a certain limit determined empirically, i.e. on the basis of experience, or by some other means.

It will be apparent that the method of the invention may be employed to reduce the water content of subterranean caverns intended for a wide variety of different uses, and it will be further apparent that the method is particularly suited to caverns to which access by human beings is impossible or impracticable, and/or for which the introduction of and/or use of conventional drying means (e.g. hot-air "cannons" and the like) is impossible or impracticable. Examples of subterranean caverns (in the following often simply referred to as caverns) to which the method of the invention may be applied are thus:

caverns for the storage of fluids (i.e. gases or liquids) such as natural gas, LPG [Liquefied Petroleum Gas: a liquefied, low-boiling petroleum fraction normally consisting predominantly of liquified propane or butanes (i.e. butane and/or isobutane) or a mixture thereof] or liquid ammonia; and, possibly,

caverns in which vehicles, machinery, electrical installations, tools and the like are to be stored, installed or used for some (possibly extended) period of time, such as mountain caverns in which machinery and/or electrical installations forming part of a chair-lift, ski-lift or cable-car system is/are to be installed.

In a preferred, further aspect of the invention, however, the cavern in question is a cavern for the storage of a fluid, particularly a cavern for the storage of natural gas. Natural gas (as well as LPG) is, of course, highly inflammable and forms explosive mixtures with air or oxygen, and it is thus clear that an oxygen-containing gas, such as air, cannot [unless the cavern is subsequently flushed with another suitable gas (complete flushing being extremely difficult, time-consuming and thus expensive)], be used as the relatively dry gas when the method of the invention is applied to the "drying" of a cavern which is to used for the storage of natural gas (or another highly inflammable fluid). Thus, when the method of the invention is employed to reduce the water content of a cavern for the storage of natural gas, it is clearly most preferable that the relatively dry gas which is introduced into the cavern, via the gas-introduction means, for the purpose of removing water from the cavern is natural gas having a water vapour content which is at least low enough to ensure that "gas hydrate" formation could not occur in natural gas of this water vapour content under any of the conditions of temperature and/or pressure which occur or arise in the gas-withdrawal means.

More generally, in applying the method of the invention for reducing the water content of caverns intended for the storage of a fluid, the relatively dry gas employed will clearly most preferably be the relatively dry gaseous form of the fluid in question. However, in the application of the method of the invention to the removal of water from caverns intended for other uses it will be apparent that different criteria may influence the choice of a suitable relatively dry gas. Thus, for example, when the cavern is intended to be readily accessible for human beings, and/or any equipment, machinery, material or the like which is to be installed or stored in the cavern constitutes no significant risk as regards fire or explosion when in contact with air, it is clear that relatively dry air (which is comparatively simple and cheap to procure or produce) may be very suitable as the relatively dry gas; in certain other situations, relatively dry nitrogen ($N_2$) may be envisaged as being suitable for use as the relatively dry gas employed according to the invention. General, practical requirements will normally be that the gas in question is of low solubility in water and does not form harmful or chemically aggressive products or solutions when brought into contact with water; thus, for example, gases such as hydrogen chloride ($HCl$), sulfur dioxide ($SO_2$) and other acid-forming gases will, in general, clearly be unsuited.

It will be apparent that no very specific guidelines can be given with respect to establishing or deciding just how low the water vapour content (i.e. how high the degree of "dryness") of the relatively dry gas employed in the manner according to the invention should be, and that an individual assessment will normally have to made on the basis of factors such as the nature, the water content and the intended use of the cavern in question, the physico-chemical properties (e.g. the dew-point) of the gas chosen to serve as the relatively dry gas, and the economic and/or technical feasibility of achieving a desirable level of "dryness" of a suitable gas. In a particular embodiment of the method of the invention as applied to the removal of water from a subterranean cavern in which natural gas is to be stored (vide infra), the water vapour content of the natural gas employed as the relatively dry gas is the water vapour content prevailing in natural gas as delivered from source (which will often, as already mentioned above, have been pretreated for the purpose, inter alia, of reducing the "natural" content of water vapour). Model calculations based on what are believed (on the basis of general experience) to be reasonable assumptions with respect to prevailing conditions and parameters indicate (vide infra) that it is then possible, using natural gas of a reasonably low level of dryness, to reduce the water content of a fairly typical gas-storage cavern in a salt formation to a sufficiently low level (i.e. sufficient to minimize the risk of gas hydrate formation in the manner already described) within a period of about 1-3 years or so. However, it is not possible to specify general upper and lower limits for the length of time necessary to achieve adequate "drying" of a cavern as this will clearly be dependent on factors such as: the volume and initial water content of the cavern; the nature of the strata surrounding the cavern; the roughness and/or degree of fissuring of the inner surface(s) of the cavern; the nature, throughput and water content of the gas used; and the desired subsequent temperature and pressure conditions for the gas.

In a further preferred aspect of the invention, the subterranean cavern in question is a cavern arising as a result of solution-mining of salt from subterranean salt formations, for example in the manner outlined previously, above. However, irrespective of the origin or detailed nature of the cavern, it is clearly preferable, in order to avoid continuing evaporation of water (i.e. water per se or water from any other aqueous phase) which may be present at the bottom of, or in the lowest-lying regions of, the cavern, that any aqueous phase which is thus located is substantially covered by a sump seal, e.g. a sump seal of a type discussed earlier, above.

Whilst there is, in principle, nothing to prevent the process according to the method of the invention being carried out with the open ends of the gas-transfer conduits of the gas-introduction and gas-withdrawal means positioned at any chosen position or level within the boundaries of the cavern in question (although it is clear that the open ends should - in order to achieve some water removal from at least a moderate fraction of the inner surfaces, inner crevices etc. of the cavern by the flow of gas between the two conduits - be at different levels), it will be clear from a consideration of the physical principles involved in removing water from a cavern in the manner according to the invention that the process is generally to be expected to be most effective in removing water from the cavern as a whole if the open end of one of the gas-transfer conduits is positioned at or near the bottom of the cavern, whilst the open end of the other gas-transfer conduit is positioned at or near the top of the cavern; this positioning of the open ends of the gas-transfer conduits is, provided that the introduction of gas into the cavern takes place steadily and at a not excessively high rate, believed to ensure steady passage or flow of the (initially) relatively dry gas introduced into the cavern over the largest possible inner surface area of the cavern, and thus to lead to the fastest possible reduction in water content of the cavern as a whole. Thus, the open end of the gas-transfer conduit of the gas-withdrawal means may be positioned at or near the bottom of the cavern, and the open end of the gas-transfer conduit of the gas-introduction means at or near the top of the cavern, or vice versa.

From the point of view of the level of difficulty involved in establishing and/or installing the gas-transfer conduits of the gas-introduction and gas-withdrawal means for a subterranean cavern, it will generally be most advantageous that the gas-transfer conduits extend substantially vertically and are mutually substantially parallel, in which case the open ends of the conduits opening to the cavern are of course their lowermost ends. Thus, for example, when establishing and/or installing the conduits is this manner, complications arising from the constant tendency of the earth's gravity to deflect or bend the path of the conduits (which may be of a very considerable total length, e.g. of the order of a kilometer) during their installation in/from a non-vertical direction may largely be avoided.

As already mentioned, a preferred aspect of the method of the present invention relates to reduction of the water content of a subterranean cavern arising as the result of solution-mining of rock salt (or some other water-soluble salt). When intended for the storage of a gas such as natural gas such caverns are, as already discussed above, often equipped with substantially vertically extending conduits in the form of (i) a brine-withdrawal (or the like) conduit extending substantially to the bottom of the cavern, and (ii) a production conduit opening to the cavern at a position substantially at the top of the cavern, these conduits normally extending within a shaft or bore lined with a casing. The latter established conduits are thus well suited for use as the gas-transfer conduits employed in the practice of the method of the invention, i.e. in a manner such that the brine-withdrawal conduit serves as the gas-withdrawal conduit, while the production conduit serves as the gas-introduction conduit, or vice versa; in this connection it may be advantageous, in order to ensure adequate clearance between the lower open end of the latter conduit and the bottom of the cavern (or the surface of any sump-sealing material or any non-sump-sealed aqueous phase), to slightly shorten the brine-withdrawal conduit, and this may suitably be achieved by, e.g., blasting away a relatively small lower-end section of the conduit by means of a small explosive charge which is lowered down through the brine-withdrawal conduit to a suitable depth and then detonated.

As also discussed previously, it is common and particularly practical that the pipes or tubes constituting the brine-withdrawal conduit and the production conduit in a cavern which has been formed by solution-mining and which is intended for gas storage are such that the brine-withdrawal conduit is of smaller diameter than the production conduit and extends (most suitably concentrically) within the production conduit, and that both conduits extend down from the earth's surface to the cavern within a drilled shaft which is normally lined with a casing.

Accordingly, in a further aspect of the present invention both the gas-withdrawal conduit and the gas-introduction conduit have the form of a pipe or tube of substantially circular cross section; in a still further aspect, one of these two conduits has an external diameter which is smaller than the internal diameter of the other conduit and is arranged such that it extends within the other conduit, preferably such that the two conduits are substantially concentric.

In another aspect of the invention, at least a part of the gas-withdrawal and gas-introduction conduits extends within a common, substantially vertical shaft or bore which communicates with the earth's surface and has a lower opening which is at or near the highest point in (or the top of) the cavern in question, the walls of this shaft or bore preferably being lined with a lining or casing. However, with or without the presence of a casing it will, in order to prevent uncontrolled escape of gas from the cavern, normally be necessary to provide some kind of seal or packer which seals the space between the shaft wall or casing and the conduits (or, when one of the conduits extends within the other, between the shaft wall or casing and the outer conduit). In principle, this seal may be established at any level within the shaft or bore; however, and particularly (as discussed previously, above, in connection with the "traditional" manner of use of caverns formed by solution-mining for gas-storage purposes) when the shaft is lined with a casing made of a relatively corrodible material such as steel, it will often be advantageous that the packer or seal is established at or near the lower opening of the shaft. A seal or packer of the above-mentioned type may suitably be, e.g.,inflatable and made of rubber or another elastomer material.

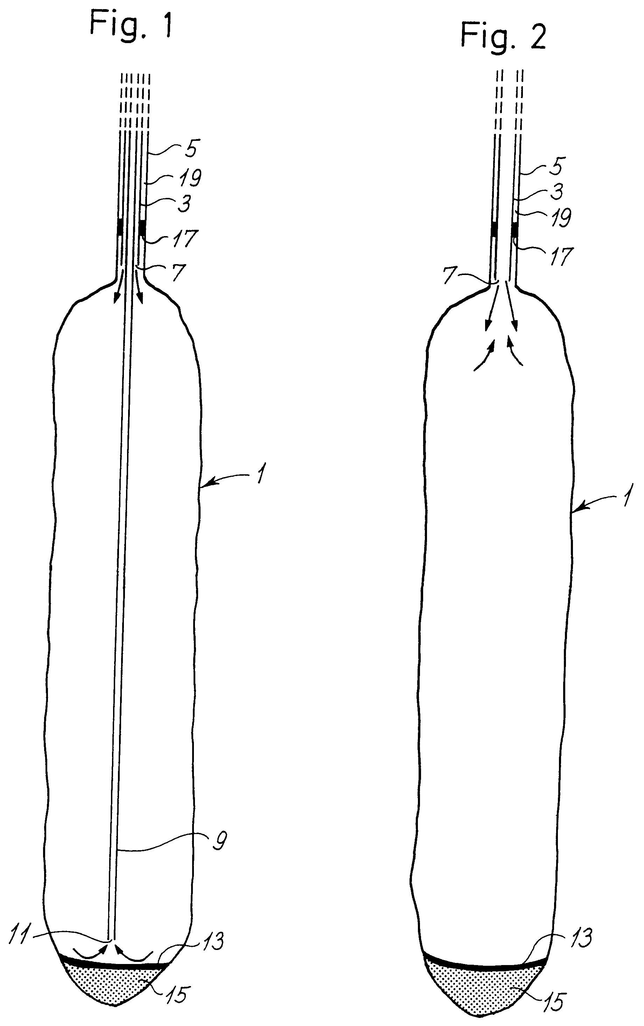

The invention will be further described in the following on the basis of model calculations performed with a view to comparing, inter alia, the time-course for removal of water from a cavern which is achievable by the method of the present invention (which in the context of the calculations described below is referred to in the following as the "laminar flow" model and which is performed in the manner shown in Fig. 1, below) with the time-course for removal of water achievable by simply allowing successive bodies of gas (each of which is stored for a period within the cavern before being removed and replaced with the next body of gas) to attain partial or essentially complete equilibrium with accessible water within the cavern (this procedure being referred to in the following as the "mixing" model).

The invention is further illustrated with reference to the drawings, in which :

Fig. 1 is a cross-sectional diagrammatic representation of a subterranean cavern (in this case a sump-sealed cavern), such as a natural gas storage cavern in a "salt dome", adapted for the performance of the method according to the present invention (i.e. a process corresponding conceptually to that which in the context of the computations described herein (vide infra) is termed the "laminar flow" model).

Fig. 2 is a cross-sectional diagrammatic representation of a subterranean cavern (in this case a sump-sealed cavern), such as a natural gas storage cavern in a "salt dome", adapted for periodic introduction and subsequent removal of gas via a common conduit (i.e. a process corresponding conceptually to that which in the context of the computations described herein (vide infra) is termed the "mixing" model).

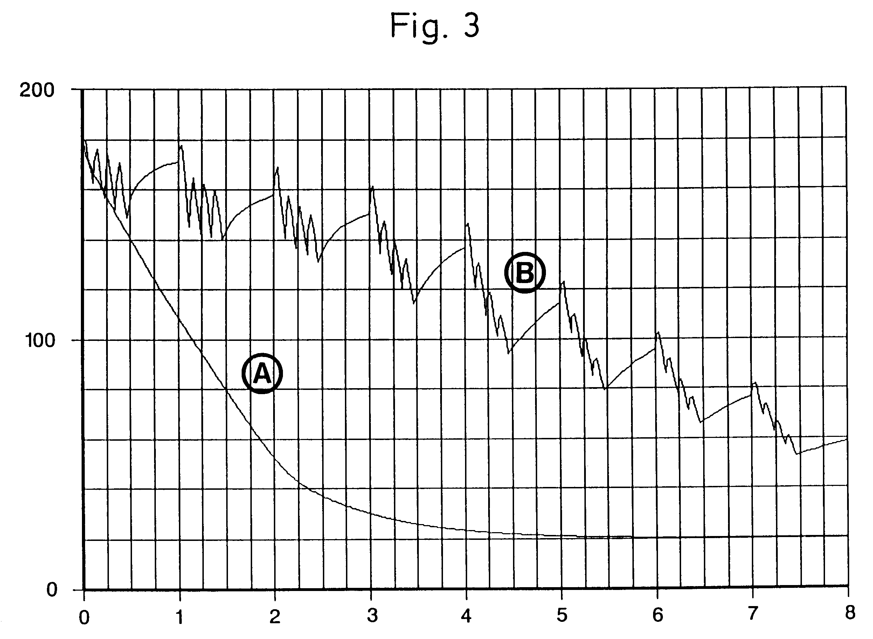

Fig. 3 is a plot showing the calculated variation in mean water-vapour content of gas within a cavern as a function of time, and under a particular set of conditions [i.e. using a "drying" gas having an initial water-vapour content of 20 mg/Nm$^3$ and a capable of having a practical maximum water-vapour content of 180 mg/Nm$^3$ [the latter value being chosen on the basis of practical experience from measurements of the water-vapour content of natural gas which has been subjected to prolonged storage in "moist" subterranean caverns in Danish salt strata, such measurements indicating a practical maximum water-vapour content corresponding to ca. 35% of the saturation water-vapour capacity (i.e. to ca. 35% "relative humidity") for the gas; in the context of the computational model, this value is thus also assumed to be the initial water vapour content of the gas present in the (hypothetical) cavern at the start of the "laminar flow" model process and the "mixing" model process], an initial total of 48000 kg of water distributed evenly in/on the inner surfaces of the cavern (which if uniformly distributed on the inner surfaces of the cavern as a film of water would correspond to a water film of thickness 1.0 mm), a total of 18900 kg of water (as water vapour) in the gas initially present in the cavern, and a "drying time" ($t_d$; vide infra) of 13 weeks], as calculated on the basis of the laminar flow model (curve A) and the mixing model (curve B), respectively. Horizontal axis: time (in years); vertical axis: water vapour content of gas [in mg/Nm$^3$ (N stands for "normal", i.e.

$Nm^3$ denotes $m^3$ measured at 0 °C and 1 atm)].

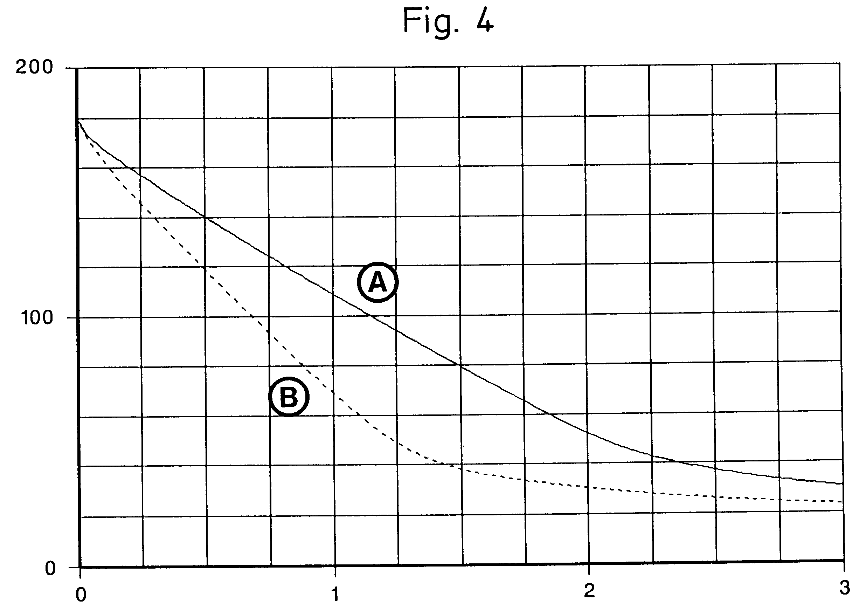

The following Figs. 4-8 show only results obtained on the basis of the "laminar flow" model:

Fig. 4 is a plot illustrating the calculated effect on the mean water vapour content of gas within the cavern of halving (see curve B) the total initial amount of water in/on the inner surfaces of the cavern (and thus halving the thickness of the water film that this would correspond to) relative to that for curve A (other variables, as well as conditions for curve A, as for Fig. 3). Horizontal axis: time (in years); vertical axis: water vapour content of gas (in $mg/Nm^3$).

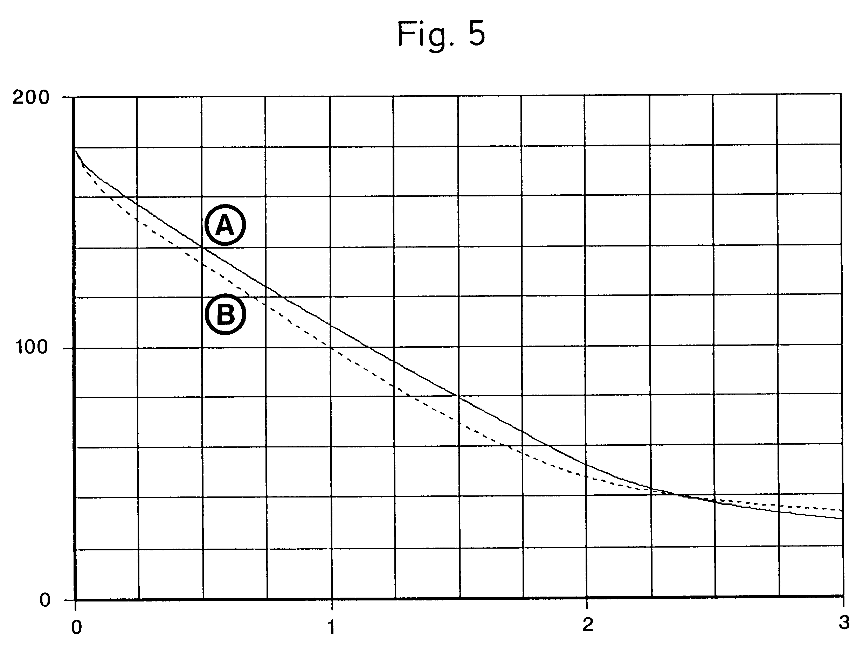

Fig. 5 is a plot illustrating the calculated effect on the mean water vapour content of gas within the cavern of doubling (see curve B) the "drying time" ($t_d$; vide infra) relative to that for curve A (other variables, as well as conditions for curve A, as for Fig. 3). Horizontal axis: time (in years); vertical axis: water vapour content of gas (in $mg/Nm^3$).

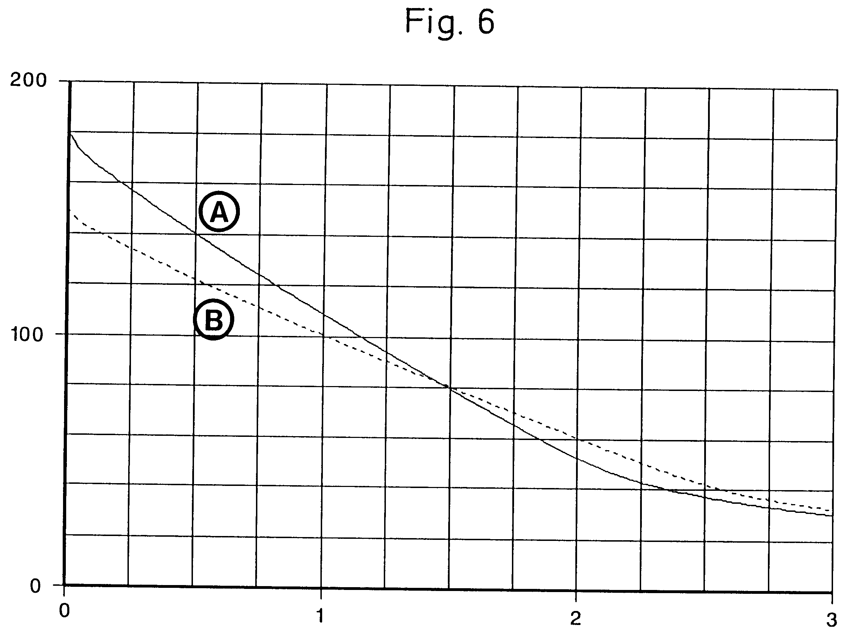

Fig. 6 is a plot illustrating the calculated effect on the mean water vapour content of gas within the cavern assuming a practical maximum water-vapour content for the "drying" gas (and an initial water vapour content for the gas within the cavern) of 150 $mg/Nm^3$ (curve B) instead of 180 $mg/Nm^3$ (curve A), corresponding to a total of 15750 kg of water (as water vapour) in the gas initially present in the cavern (other variables, as well as conditions for curve A, as for Fig. 3). Horizontal axis: time (in years); vertical axis: water vapour content of gas (in $mg/Nm^3$).

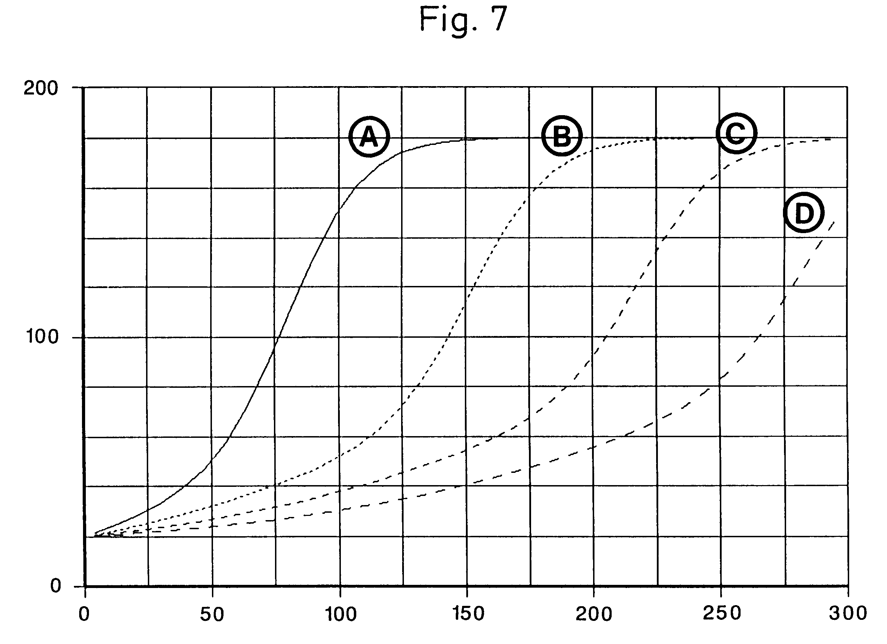

Fig. 7 is a plot showing calculated water-vapour content for gas within the cavern as a function of depth from the top of the cavern after various accumulated times of operation of the "laminar flow" model process (curve A: after six months; curve B: after 12 months; curve C: after 18 months; curve D: after 24 months). Variables as for Fig.3. Horizontal axis: depth from top of cavern (in meters); vertical axis: water vapour content of gas (in $mg/Nm^3$).

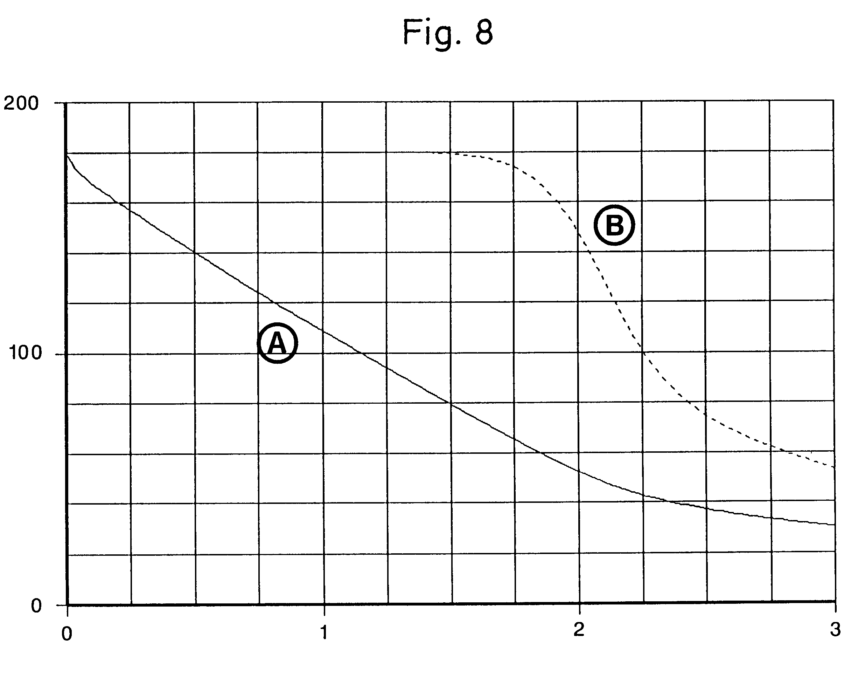

Fig. 8 is a plot comparing the calculated variation in mean water-vapour content of gas within the cavern as a function of time (curve A) with the calculated curve for time vs. water-vapour content of gas withdrawn from the cavern via a gas-withdrawal conduit having its lower open end positioned at the bottom of the cavern (in this case at a depth of 300 meters from the top of the cavern) (curve B). Variables, as well as conditions for curve A, as for Fig. 3. Horizontal axis: time (in years); vertical axis: water vapour content of gas (in $mg/Nm^3$).

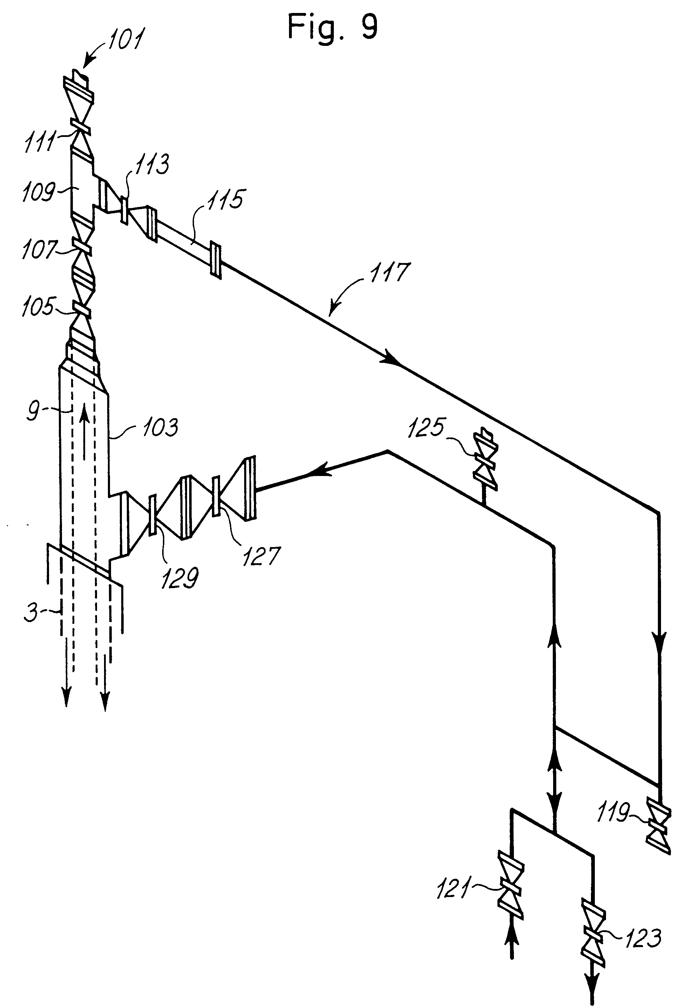

Fig. 9 illustrates schematically the constructional principles underlying an above-ground, well-head manifold system suitable, for example, for use in connection with the application of the method according to the invention to reduction of the water content of a cavern for the storage of natural gas.

Description of the computational model:

The calculations described here were performed for a hypothetical, vertical, cylindrical cavern. The cavern height [which in the case of the "mixing" model is the distance from top to bottom within the cavern (the cavern in this case being equipped with a single conduit for gas introduction and gas withdrawal essentially in the manner illustrated in Fig. 2), and in the case of the "laminar flow" model is the vertical distance between the opening of the gas-introduction conduit and the opening of the gas-withdrawal conduit (the cavern being equipped with such conduits essentially in the manner illustrated in Fig. 1)], in the following denoted h, was taken to be 300 meters, and the total quantity of gas (expressed in $Nm^3$), $V_{tot}$, within the cavern was taken to be $105 \times 10^6 \; Nm^3$.

In studying the effect of the "laminar flow" model for removing water from a cavern, the cavern was regarded for computational purposes as being divided into a number of layers, the height of each such layer corresponding to the height of the quantity of gas injected into (i.e. introduced into) the cavern in one week; in the present calculations, the quantity of gas injected into the cavern in one week was set equal to $3 \times 10^6 \; Nm^3$. Thus, in general, for a given rate of gas injection into the cavern, the number of (computational) layers within the cavern is equal to the total quantity of gas divided by the quantity of gas injected in one week, which in the present case gives:

$$(105 \times 10^6)/(3 \times 10^6) \; = \; 35 \text{ layers.}$$

The transport of water from the cavern walls within each layer to the gas within each layer (transport of water from the gas to the cavern walls being neglected for the purposes of the present calculations) was then calculated on the basis of the mathematical relationships described below (vide infra).

In studying computationally the effect of the "mixing" model for removing water from a cavern, a situation was considered in which a certain proportion of the gas within the cavern is replaced at regular intervals by first injecting a certain amount of gas into the cavern and subsequently removing a corresponding amount of gas from the cavern. The height ($h_{inj}$) of the replacement quantity ($V_{inj}$) of gas injected into the cavern is given by:

$$h_{inj} \; = \; h \cdot V_{inj}/V_{tot}$$

Inserting the above-mentioned values for h and $V_{tot}$ (i.e. h = 300 m and $V_{tot} = 105 \times 10^6 \; Nm^3$), and assuming a reference value for $V_{inj}$ of $24 \times 10^6 \; Nm^3$, a value for $h_{inj}$ of 68.6 meters is obtained.

The height quantity $h_{inj}$ was regarded as being divided up into layers in the same way as for the "laminar flow" model, i.e. into layers whose height corresponds to that of the amount of gas injected in one week. The reference calculations corresponded to injection for a period of four weeks, i.e. $h_{inj}$ was divided up into four layers each having a height of 17.1 m. For each of the latter layers, as well as for the "underlying" bulk layer of height equal to h - $h_{inj}$ (= 300 - 68.6 = 221.4 m), water transport from the cavern walls to the gas within each layer was then calculated in the same manner as for the "laminar flow" model.

Each round of computations considered a number of gas-withdrawal/gas-injection cycles followed by a "dormancy" period. In the present case a total of 4 such cycles was considered, each cycle consisting of 2 weeks of withdrawal of a total of 24 x 10⁶ Nm³ of gas from the cavern, followed by 4 weeks of injection of a total of 24 x 10⁶ Nm³ of gas into the cavern. The "dormancy" period (which would correspond, in reality, to a winter pause in gas-withdrawal/gas-injection) was set equal to 28 weeks, so as to give a total period of consideration for each round of computations equal to [4(2 + 4) + 28] = 52 weeks, i.e. 1 year. In considering withdrawal of gas computationally, the water-vapour content of the withdrawn gas during the first half-week of withdrawal was assumed (on the basis of practical experience with real caverns) to be equal to the water-vapour content of the gas in the uppermost layer, after which complete mixing of the gas in the cavern was assumed to occur (corresponding to the mixing which is expected in a real cavern as a consequence of convection resulting from the temperature drop which will occur as a result of gas withdrawal from the cavern). In considering injection of gas computationally, laminar flow of the entering gas (i.e. as for the "laminar flow" model) was assumed, i.e. the incoming, relatively dry gas was assumed not to mix with the underlying "wet" gas already present within the cavern; this assumption derives from an expectation (based on practical experience) that the temperature of the gas injected into a real cavern will normally be higher than that of the "wet" gas already present in the cavern.

After completion of four gas-withdrawal/gas-injection cycles, the calculation of water transport from the cavern walls to the gas within the cavern as a whole during the above-mentioned "dormancy" period was carried out in the manner already outlined above and further elaborated below.

In order to simplify the calculations for both the "laminar flow" model and the "mixing" model, no account was taken of variations in the temperature or pressure of the gas within the cavern as a function of depth, and the volume of gas in an injected or withdrawn layer was regarded as being injected or withdrawn instantaneously into/from the cavern.

In performing the water-transport calculations for the "laminar flow" model and the "mixing" model, only aqueous phase retained in/on the walls of the cavern was considered, i.e. the cavern was treated as if it were a sump-sealed cavern in which the effectiveness of the sump-seal was 100% (although the computational approach employed could, if desired, be modified to also take account, for example, of a contribution to the water-vapour content of the gas corresponding to that deriving from an non-sump-sealed sump or from "leakage" of water vapour through an sump-seal which is not completely impermeable to water-vapour). The water (as water vapour) removed from the cavern walls is assumed to mix fully with the gas in the adjacent (computational) layers. If this assumption should later prove to be invalid, the model can easily be modified so as to incorporate, for example, a simple mathematical function which takes account of an increase in water-vapour content of the gas from the central "vertical" axis of the cavern to the cavern wall. The less efficient mixing to which this latter example of a modified computational model would correspond will result in a lower rate of transport of water away from the cavern walls, and thus slow the entire "drying" process.

In the present case, the rate of transport or removal of water from the cavern walls was calculated on the basis of the relationship:

$$q = [(C_w^{max} - C_w^t)/(C_w^{max} - C_w^{dry})] \cdot \gamma \cdot A$$

where

q is the rate of removal of water from the cavern walls within the layer in question (in kg/h),

$C_w^t$ is the water-vapour content of the gas within the layer at time t from the start of the process (in mg/Nm³),

$C_w^{max}$ is the practical maximum water-vapour content of the gas in question (in mg/Nm³),

$C_w^{dry}$ is the water-vapour content of the gas as injected into the cavern (in mg/Nm³),

A is the amount of water in/on the cavern walls within the layer (in kg), and

$\gamma$ is a rate constant, in the following denoted the "drying constant" (in h⁻¹).

In fact, two contributions to the amount of water in/on the cavern walls within a given layer were considered, viz. $A_1$ with associated $\gamma_1$, and $A_2$ with associated $\gamma_2$: $A_1$ corresponds to water which is relatively easily removed from the cavern walls, and which is assumed to require a "drying time", denoted $t_d$, which is the time required for removal of 95% of the water by exposure to "dry" gas having a water-vapour content equal to that of the gas as injected into the cavern ($C_w^{dry}$); a value for $C_w^{dry}$ of 20 mg/Nm³ was employed throughout in the calculations. $A_2$ corresponds to water which is more difficult to remove from the cavern walls, and which is assumed to require a "drying time" which is an order of magnitude greater than for $A_1$, i.e. a drying time equal to $10t_d$. The initial values of $A_1$ and $A_2$, i.e. $A_{1, initial}$ and $A_{2, initial}$, for each layer were assumed to be equal.

Thus, for the two contributions to the transport of water from the cavern walls to the gas, the following two equations apply for each (computational) layer:

$$q_1 = [(C_w^{max} - C_w^t)/(C_w^{max} - C_w^{dry})] \cdot \gamma_1 \cdot A_1$$

and

$$q_2 = [(C_w^{max} - C_w^t)/ (C_w^{max} - C_w^{dry})] \cdot \gamma_2 \cdot A_2$$

where

$$\gamma_1 = [\ln (100/5)]/td = 2.996/t_d$$

and

$$\gamma_2 = [\ln (100/5)]/10t_d = 0.2996/t_d.$$

For each layer and each computational time increment, the calculated amount of water transported from the cavern walls to the gas (distributed within the gas in the form of water vapour) was added to the calculated water-vapour content of the gas at the end of the preceding time increment to give the new, "current" water-vapour content of the gas.

The "reference" values for the various parameters involved in the calculations were those applying in connection with Fig. 3 (vide supra), i.e.: $C_w^{max} = 180$ mg/Nm$^3$; $C_w^{dry} = 20$ mg/Nm$^3$; $\Sigma A_{1, initial} = \Sigma A_{2, initial}$ (summed over all layers) = 24000 kg, i.e. $\Sigma A_{1, initial} + \Sigma A_{2, initial} = 48000$ kg; and $t_d = 13$ weeks. The latter reference values for $\Sigma A_{1, initial}$, $\Sigma A_{2, initial}$ and $t_d$ were chosen on the basis of laboratory investigations.

Figs. 3-8 provide a summary of results obtained on the basis of the computational approach described herein. Whilst a number of simplifying assumptions have (as indicated above) been made in connection with the calculations, the models employed are believed to provide an at least qualitatively reasonably realistic prediction of the results to be expected and advantages to be achieved in the real-life drying of subterranean caverns of the types discussed herein employing the method according to the present invention:

The following aspects are particularly noteworthy: firstly, it it apparent from Fig. 3, which compares the effectiveness of the "laminar flow" model with that of the "mixing" model, that the "laminar flow" model predicts a considerably faster and more even reduction of the mean water-vapour content of the gas within a cavern than is the case with the "mixing" model. In this connection it should be noted that the "saw-toothed" appearance of the plot for the "mixing" model, with successive groups of four sharp peaks followed by a smooth curve section, derives from the above-discussed computational supposition of four gas-withdrawal/gas-injection cycles followed by a "dormancy" period. Secondly, Figs. 4, 5 and 6 provide an indication that the time-course of reduction of the mean water-vapour content of the gas according to the "laminar flow" model is relatively insensitive to reasonably large variations in (i) the initial amount of water in/on the cavern walls, (ii) the drying time ($t_d$) and (iii) the practical maximum water-vapour content of the "drying" gas (which is set equal to the initial water-vapour content of the "wet" gas within the cavern), respectively. Thirdly, Figs. 7 and 8 provide an indication not only that a significant reduction in the mean water-vapour content of the gas within a cavern is achievable within an acceptable period of time (e.g., in this model case, a reduction from 180 mg/Nm$^3$ to ca. 50 mg/Nm$^3$ within a period of 2 years), but also, for example, that a similar reduction in the water-vapour content of gas withdrawn from the bottom of the cavern (i.e. in this model case from a cavern depth of ca. 300 meters) is achievable within a further period of about 1 year.

Returning now to Figs. 1, 2 and 9:

Fig. 1 shows a cross-sectional diagrammatic representation of a subterranean cavern (1) (such as natural gas storage cavern in a "salt dome") adapted for the performance of the method according to the present invention. Introduction of relatively dry gas (indicated by downward-pointing arrows near the top of the cavern) into the cavern takes place via a conduit (3) [such as a "production conduit" (vide supra)], suitably an essentially circularly cylindrical conduit, which extends down to the cavern (1) through a shaft (5) connecting the cavern with the earth's surface (not shown) and which has a lower open end (7) near the shaft's lower end. Gas having a higher water-vapour content than the introduced gas is withdrawn from the cavern (1) via a conduit (9) [such as a "brine-withdrawal conduit" (vide supra)], suitably an essentially circularly cylindrical conduit, which extends within the former conduit (suitably substantially concentrically when both the gas-introduction conduit (3) and the gas-withdrawal conduit (9) are circularly cylindrical conduits] down to a depth within the cavern such that there is a slight clearance between a lower open end (11) of the conduit (9) and a sump seal (13) covering a sump (15) at the bottom of the cavern (1). This figure also shows a seal or packer (17) (vide supra) which serves to seal a space (19) (e.g. an annular space) between the walls of the shaft (5) [the shaft generally being lined with a lining or casing (not shown), in which case the "walls" of the shaft will be the casing walls] and the gas-introduction conduit (3) so as to prevent any escape of gas from the cavern (1) other than via the gas-withdrawal conduit (9).

Fig. 2 shows a cross-sectional diagrammatic representation of a subterranean cavern (1) (such as natural gas storage cavern in a "salt dome") in which introduction of relatively dry gas and subsequent withdrawal of gas having a higher water content via a common conduit (3) [such as a "production conduit" (vide supra)], suitably an essentially circularly cylindrical conduit, is symbolized by downward-pointing and upward-pointing arrows, respectively, near the top of the cavern. The conduit (3) extends down to the cavern (1) through a shaft (5) connecting the cavern with the earth's surface (not shown) and has a lower open end (7) near the shaft's lower end. This figure also shows a sump seal (13) covering a sump (15) at the bottom of the cavern (1), and further shows a seal or packer (17) (vide supra) which serves to seal a space (19) (e.g. an annular space) between the "walls" of the shaft (5) and the gas-introduction conduit (3) in the same manner, and for the same purpose, as described in connection with Fig. 1.

Fig. 9 illustrates schematically the constructional principles underlying a well-head manifold system suitable for use in connection with a preferred embodiment of the method according to the invention for reduction of the water content of a cavern for the storage of natural gas. The left-hand part of the figure shows a well-head arrangement (101) with which uppermost ends of a gas-introduction conduit (3) and a gas-withdrawal conduit (9) [represented by dashed lines, these two conduits most suitably being substantially concentric, circularly cylindrical conduits (cf. the explanation given above in connection with Fig. 1)] communicating with a natural gas storage cavern [such as a cavern illustrated in Fig. 1 (not shown in this figure)], are connected in a gas-tight manner. The gas-introduction conduit (3) (represented by heavy dashed lines in the lower left-hand part of the figure) is connected to a lower part of a T-piece (103), and the conduit (9) [represented by lighter dashed lines and extending within and above the conduit (3) and further within the T-piece (103)] is connected to an upper part (shown schematically in the figure as a narrowed upper part) of the T-piece (103). The flow of gas from the cavern [indicated by an upward-pointing arrow drawn between the dashed lines representing the gas-withdrawal conduit (9)] may be regulated by means of a valve (105), suitably a gate-valve, with which the uppermost part of the T-piece (103) is connected, and the latter valve (105) is in turn preferably further connected to an automatic safety valve (107) which is normally open but which is capable of automatically shutting off the flow of gas emerging from the cavern, e.g. in the event of the flow rate of gas exceeding some preset safety limit. The safety valve (107) [or, in the absence of such a safety valve, the valve (105)] is connected to a T-piece (109), the uppermost part of which is equipped with an access port or valve (111), suitably a gate-valve. The latter access port or valve (111), which is normally closed, permits the lowering [via the T-piece (111) and the valves (107) and (105), and by means of a cable or the like] an explosive charge for shortening the gas-withdrawal conduit (9) (vide supra) or a measuring probe or device for measuring the temperature, pressure, water-vapour content or some other parameter of gas within, or below the lower end of, the gas-withdrawal conduit. A side-arm of the T-piece (109) is connected to a valve (113), such as a gate-valve, which is normally open and which is connected an instrument manifold (115) comprising measuring devices or probes (not shown) for measuring the temperature, pressure, water-vapour content, etc., of the gas emerging from the well-head (101).

The emerging gas passes on via a suitable transport conduit system (117) [the direction of gas flow being indicated by arrows on the uppermost and extreme right-hand sections of the conduit system (117)] equipped with an injection port or valve (119) permitting [if so required, e.g. on the basis of measurements made at the instrument manifold (115)] injection of an inhibitor (such as a glycol) for inhibiting gas hydrate formation in the gas (vide supra) during its subsequent further handling prior to distribution to the consumer. The transport conduit system comprises, apart from a branch comprising the latter-mentioned uppermost and extreme right-hand sections, a branch via which gas arriving at the cavern site from a supplier can enter the transport conduit system (117) and be passed on for introduction into the cavern. Entry of gas from a supply source into the transport conduit system is regulated by means of a regulating valve (121), whilst withdrawal from the transport conduit system (117) of gas emerging from the cavern is regulated by means of a regulating valve (123). Clearly, when admitting gas to the transport conduit system (117) via the valve (121), the valve (123) must be closed. Conversely, when withdrawing gas from the transport conduit system (117) via the valve (123), the valve (121) must be closed. The transport conduit system (117) is preferably equipped with a pressure-release vent or valve (125) which is normally closed but via which the transport conduit system (117) may, if necessary, be depressurized [e.g. for the purpose of carrying out construction work, repairs, welding etc. in the transport conduit system (117)].

Gas is introduced into the cavern via an automatic shut-off valve (127), such as a wing-valve, which in turn is connected to a regulating valve (129), suitably a gate-valve, connected to the T-piece (103) via a side-arm thereon [the direction of gas flow towards the valve (127) being indicated by arrows on the sections of the transport conduit system (117) in question]. The shut-off valve (127) is normally open but is capable of automatically shutting off the flow of gas emerging from the cavern, e.g. in the event of the flow rate of gas exceeding some preset safety limit, e.g in the event of a sudden pressure drop on the side of the transport conduit system (117) as a result of a leakage or the like in the conduit system (117), thereby preventing uncontrolled escape of gas from the cavern. The direction of flow of gas into the cavern via the gas-introduction conduit (3) is indicated at bottom left in the figure by two downward-pointing arrows within the boundaries of the heavy dashed lines representing the gas-introduction conduit (3).

Employing a well-head manifold system involving the constructional principles illustrated in Fig. 3, the manner of operation of a particular, preferred embodiment of the method according to the invention, in which there is a (relatively short) time-lag between introduction of gas into the cavern and withdrawal of gas from the cavern, is then as follows (with reference to Fig. 3):

(i) natural gas (of relatively low water-vapour content) under a suitably high pressure is admitted at a suitable rate to the transport conduit system (117) and further into the cavern from the supply via the valve (121). During this part of the process the valve (129) is open, and the valves (123) and (105) are closed. The introduction of relatively dry gas into the cavern is continued for a suitable period of time, e.g. of the order of one day, after which the valves (121) and (129) are closed.

(ii) the valves (105) and (123) are opened so as to provide a suitable rate of withdrawal of "moist" gas from the cavern. The withdrawal of "moist" gas is continued until an amount of gas essentially equal to the amount initially introduced has been withdrawn.

(iii) the entire process consisting of steps (i) and (ii) is continued until an acceptably low water-vapour content in the withdrawn gas is achieved.

As already mentioned, it is equally possible to initiate the process with gas-withdrawal.

As long as the water-vapour content of the "moist" gas withdrawn from the cavern is too high (i.e. until the continued operation of the method of the invention reduces the water-vapour content of the emergent gas sufficiently to ensure avoidance of the above-described problems of gas-hydrate formation), the withdrawn gas will have to be dried by more "traditional" means, e.g. by counter-current drying using a glycol (in which case the glycol will have to be regenerated, e.g. by distillation). It should be noted here that a prolonged interruption in the operation of the entire process will (primarily as a result of continuing uptake of water from the inner surfaces of the cavern by the gas) be expected to result in a renewed increase in the water-vapour content of the gas as a whole.

It is to be anticipated that the attainment of a satisfactorily low water-vapour content in the withdrawn gas will result in a very substantial reduction in costs, since the need for permanent above-ground gas-drying facilities (which are very energy-consuming) and gas hydrate formation inhibitors should be largely eliminated.

For a cavern of fairly typical capacity, the amount of gas injected into and withdrawn from the cavern in each performance of steps (i) and (ii), above, will typically be of the order of 1% (or less) of the total amount of gas within the cavern, i.e. temperature effects arising as a result of withdrawal of such a relatively small proportion of the gas content in the cavern will be negligible.

Practical exploitation of the method of the invention:

Based on the conclusions arrived at on the basis of the computational model described above, experiments to test the effectiveness of the method of the invention are in progress using the embodiment of the method as described in connection with Fig. 3 (vide supra). Two caverns (in the following denoted C1 and C2) in a Danish "salt dome" on the mainland of Jutland are currently being employed for this purpose:

C1, which is the larger of the two, has a volume of ca. 508000 $m^3$, corresponding to a gas capacity ($V_{tot}$) of ca. 120 x $10^6$ $Nm^3$. The top of the cavern is at a depth of ca. 1350 meters, and the bottom is at a depth of ca. 1685 meters (below ground level), i.e the cavern has a height of ca. 335 meters.

C2 has a volume of ca. 380000 $m^3$, corresponding to a gas capacity ($V_{tot}$) of ca. 70 x $10^6$ $Nm^3$. The top of the cavern is at a depth of ca. 950 meters, and the bottom is at a depth of ca. 1260 meters (below ground level), i.e the cavern has a height of ca. 310 meters.

Both caverns are equipped with a 13 3/8″ casing, a 9 5/8″ production conduit and a 4 1/2″ brine-withdrawal conduit (the quoted dimensions being external diameters).

At the time of filing of the present application the experiments have been underway, with some unavoidable, short interruptions, for ca. 15 months. The total amounts of gas which have been withdrawn at the time of filing are ca. 180 x $10^6$ $Nm^3$ for cavern C1, and ca. 150 x $10^6$ $Nm^3$ for cavern C2. As expected, no appreciable fall in water-vapour content of the gas withdrawn from cavern C1 has as yet been observed. In the case of cavern C2, the water-vapour content of the gas withdrawn from the cavern has indeed decreased but no clear trend has been discernible on the basis of the presently available data. When a clear trend becomes apparent, the most appropriate values for the (calculational) physical parameters employed in the presently employed "laminar flow" calculational model (described herein) will be evaluated. If the current model proves to be inadequate or oversimplified, it will be revised accordingly.

## Claims

1. A method for reducing the water content of a natural or artificial subterranean cavern,

said cavern at least being provided with (i) means for introducing a relatively dry gas into said cavern and (ii) means for withdrawing gas from said cavern, said gas-introduction means and said gas-withdrawal means each comprising a gas-transfer conduit having an open end opening to said cavern, the open end of one of said gas-transfer conduits being positioned lower than the open end of the other of said gas-transfer conduits,

the method comprising:

introducing relatively dry gas into said cavern via one of said gas-transfer conduits, and

withdrawing, via the other of said gas-transfer conduits, gas having a higher water vapour content than that of said introduced gas.

2.  A method according to claim 1, said introduction of said relatively dry gas and said withdrawal of gas having a higher water vapour content taking place substantially simultaneously and continuously.

3.  A method according to claim 1, said introduction of said relatively dry gas and said withdrawal of gas having a higher water vapour content taking place in an alternating, cyclic manner.

4.  A method according to any one of claims 1-3, said cavern being a cavern for the storage of a fluid.

5.  A method according to claim 4, said fluid being "natural gas" as hereinbefore defined.

6.  A method according to claim 5, said introduced, relatively dry gas being "natural gas" having a water vapour content which is at least sufficiently low as to ensure that "gas hydrate" formation could not occur in said relatively dry gas under any of the conditions of temperature and/or pressure which occur or arise in said gas-withdrawal means.

7.  A method according to any one of claims 1-6, said cavern being a cavern arising as a result of solution-mining of salt from subterranean salt formations.

8.  A method according to any one of claims 1-7, said cavern being a cavern wherein any aqueous phase present at the bottom of said cavern is substantially covered by a "sump seal".

9.  A method according to any one of the preceding claims, said open end of one of said gas-transfer conduits being positioned at or near the bottom of said cavern, and said open end of the other of said gas-transfer conduits being positioned at or near the top of said cavern.

10. A method according to claim 9, said open end of said gas-transfer conduit of said gas-withdrawal means being positioned substantially at the bottom of said cavern.

11. A method according to claim 9, said open end of said gas-transfer conduit of said gas-introduction means being positioned substantially at the bottom of said cavern.

12. A method according to any one of the preceding claims, said gas-transfer conduits of said gas-introduction and gas-withdrawal means extending substantially vertically and being mutually substantially parallel, said open ends of said conduits being their lowermost ends.

13. A method according to claim 12, each of said conduits having the form of a pipe or tube of substantially circular cross section.

14. A method according to claim 13, one of said conduits having an external diameter which is smaller than the internal diameter of the other of said conduits, said one conduit extending within said other of said conduits.

15. A method according to claim 14, said conduits being substantially concentric.

16. A method according to any one of claims 12-15, at least a part of each of said conduits extending within a common, substantially vertical shaft or bore which communicates with the earth's surface and has a lower opening substantially at the highest point in said cavern.

17. A method according to claim 16, the walls of said shaft or bore being lined with a lining or casing.

18. A method according to claim 16 or 17, the space between the shaft wall or casing and the conduits, or, when one of the conduits extends within the other, between the shaft wall or casing and the outer conduit, being sealed by means of a seal or packer established at some level within the shaft, preferably substantially at the lower opening of the shaft.

# Fig. 1

# Fig. 2

Fig. 3

EP 0 506 600 A1

Fig. 4

EP 0 506 600 A1

## Fig. 5

Fig. 6

EP 0 506 600 A1

Fig. 7

EP 0 506 600 A1

Fig. 8

# Fig. 9

**European Patent Office**

## EUROPEAN SEARCH REPORT

Application Number

| DOCUMENTS CONSIDERED TO BE RELEVANT | EP 92610020.7 |
|---|---|

| Category | Citation of document with indication, where appropriate, of relevant passages | Relevant to claim | CLASSIFICATION OF THE APPLICATION (Int. Cl.5) |
|---|---|---|---|
| A | <u>DE - A - 3 422 240</u><br>(ROMANSKI)<br>    * Abstract *<br>-- | 1-18 | E 21 B 43/00<br>B 65 G 5/00 |
| A | <u>DE - A - 1 758 780</u><br>(SHELL)<br>    * Totality *<br>-- | 1-18 | |
| D,A | <u>US - A - 4 109 471</u><br>(SEBALD)<br>    * Abstract *<br>---- | 6,7,8 | |

TECHNICAL FIELDS
SEARCHED (Int. Cl.5)

B 01 D 53/00
B 65 G 5/00
E 21 B 43/00
E 21 F 17/00

The present search report has been drawn up for all claims

| Place of search | Date of completion of the search | Examiner |
|---|---|---|
| VIENNA | 04-06-1992 | BRUNHUBER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P0401)